# EUROPEAN PATENT SPECIFICATION

(11) **EP 0 441 662 B1**
(45) Date of publication and mention of the grant of the patent: **19.08.1998**
(21) Application number: 91301092.2
(22) Date of filing: 11.02.1991
(51) Int. Cl.: G03B 17/30

(54) **Film magazine and camera**
Filmmagazin und Kamera
Magasin de film et caméra

(30) Priority: 09.02.1990 JP 30508/90; 02.04.1990 JP 87860/90; 02.04.1990 JP 87861/90
(43) Date of publication of application: 14.08.1991
(60) Divisional application: 95108511.7
(73) Proprietor: NIKON CORPORATION, Tokyo (JP)
(72) Inventor: Ezawa, Akira, Setagaya-ku, Tokyo (JP)
(74) Representative: Burke, Steven David

(56) References cited:
- EP-A- 378 170
- EP-A- 427 922
- US-A- 4 338 015
- US-A- 4 832 275
- US-A- 4 887 110

## Description

### BACKGROUND OF THE INVENTION

### Field of the Invention

The present invention relates to a film magazine which contains photographic film wound around a spool in the form of a roll and a camera to which the film magazine is attached. More particularly, this invention is concerned with a film magazine having a function which indicates the film use status distinguishing whether the film is unused, used half or extracted in the middle, or used up (exposed), and a camera to which the film magazine is attached.

### Related Background Art

In general, photographic film is handled in a state in which the film is contained in a magazine or a simple container having a shading function, and well-protected from being exposed when it is attached to or extracted from a camera, kept in storage, or carried here and there.

For the film magazine, it must be identified whether film contained in the magazine is unused or used up (exposed). For a typical 35-mm film magazine, by checking whether the film end comes out of a slot of the magazine, it is determined whether film contained inside is unused or exposed. That is to say, when film is rewound at completion of exposure, the film and the film end inclusive are usually wound up into the magazine. By checking whether the film end is wound up or not, it can be distinguished whether the film is unused or exposed.

However, when a film use status is distinguished by checking whether the film end comes out of the magazine as mentioned above, if the film is rewound at completion of photography, the film end must be wound up inside the magazine without fail. This operation, however, lacks for certainty. Therefore, this method cannot be said to be reliable. In particular, assuming that the film end comes out of a magazine for some reason, if the film is extracted from a camera and stored temporarily, the film may be recognized as an unused film mistakenly. If such a magazine is attached to the camera, since photography can be done, a problem of a double exposure occurs.

Some photographers do not expose film attached to a camera up to the last frame, but rewind it in the middle of feeding and extract it from the camera. Then, the film is re-attached to the camera and the remaining portion of the film is exposed. During the rewinding, a special precaution is needed so as not to wind the film end into the magazine. In this case, the film is always stored with its end out of the magazine. The magazine cannot be differentiated from a new one.

Therefore, some photographers write the use status of film in a magazine down on the outer surface of the magazine or a housing case. This is a nuisance. Some measure must be taken to solve these problems.

A magazine for containing film is proposed, for example, in the specification of the U.S. Patent No. 4832275 or No. 4482232, wherein the film end is always drawn into the magazine when the magazine is unattached. In such a magazine, a distinguishing method using the film end cannot be adopted for the foregoing 35-mm film magazine. Even if exposed film is attached to a camera, photography can be performed. This is accompanied with the aforesaid problem of a double exposure. In this type of a magazine, some measure must be taken to allow a photographer to check whether film is unused, extracted in the middle, or used up (exposed).

### SUMMARY OF THE INVENTION

The present invention is defined in the claims.

With the present invention a film magazine can be provided which indicates whether film is unused or used up.

Also, with the present invention, a carrier can be provided for outputting information to the film magazine, whereby when an unused film magazine is attached and exposed, the film magazine will be treated as a used one thereafter.

Also, with the invention a camera can be provided for inhibiting attachment of a used film magazine.

A film magazine relating to one embodiment of the present invention forms at least two display portions for displaying a use status of film in the magazine on the outer surface of the magazine, and includes a pointing means which rotates according to the movement of a spool around which film is wound, selects any of the display portions depending on the rotation stop position of the spool, and then indicates the film use status. In addition, a means is selectively provided to restrain the shift of a position to which the pointing means points at a time except when the magazine is attached to a camera. A camera relating to this embodiment of the invention, to which the film magazine is attached, comprises a spool drive unit for rotating a spool of the magazine, and a controller for controlling the spool rotation stop position according to the use status of film.

A film magazine relating to another embodiment of the invention includes a fitting means as part of the housing of the magazine which assumes either of two states of fitted (blocking) or unfitted (non-blocking), thus permitting or inhibiting attachment of the magazine to a camera. A camera relating to this embodiment of the invention comprises a means for changing the fitting means of the film magazine to either the fitted or unfitted state depending on the use status of film, and a means for permitting attachment of the magazine to be a magazine chamber when the fitting means is in unfitted state or inhibiting the attachment when the fitting means is in fitted state.

According to the first embodiment, a use status of a film in a magazine, that is "unused," "extracted in the middle," or "used up (exposed)," can be indicated easily using a pointing means on the outer surface of the film magazine which is stopped selectively at a given rotating position by a spool drive unit in a camera according to the movement of a spool, and at least two display portions to which the pointing means selectively points.

According to the second embodiment, a fitting means installed as part of the housing of a magazine is changed to the fitted or unfitted state depending on whether the film use status indicates "unused," "extracted in the middle," or "used up," thus inhibiting reattachment of a used film magazine when a film is attached to a magazine chamber in a camera.

### BRIEF DESCRIPTION OF THE DRAWINGS

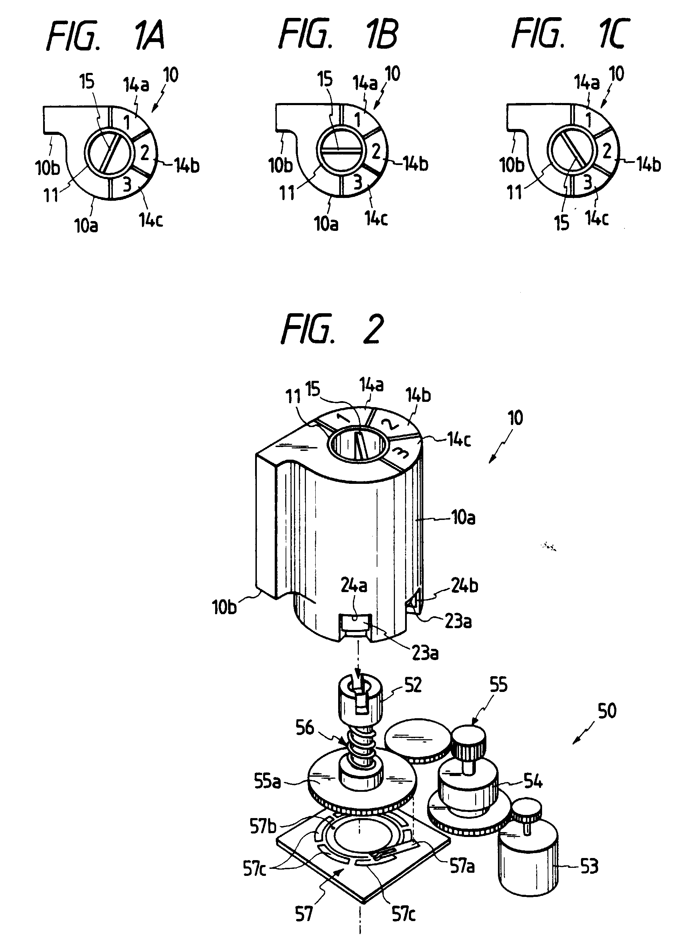

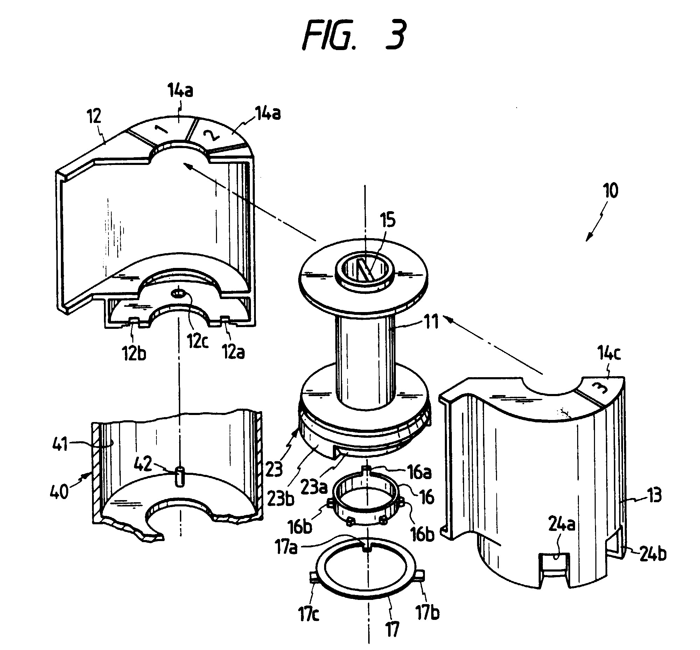

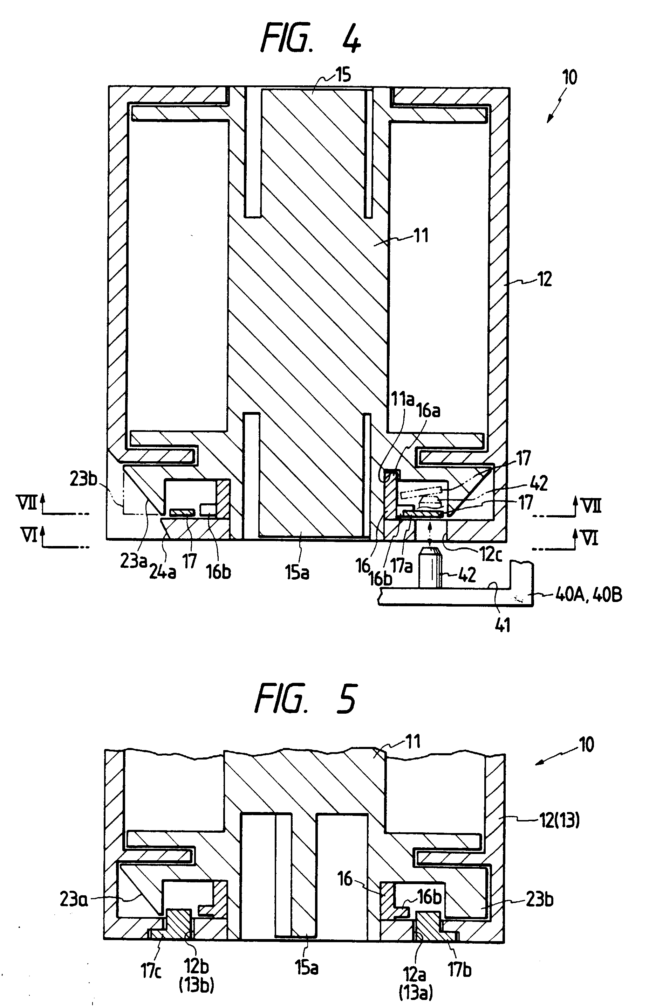

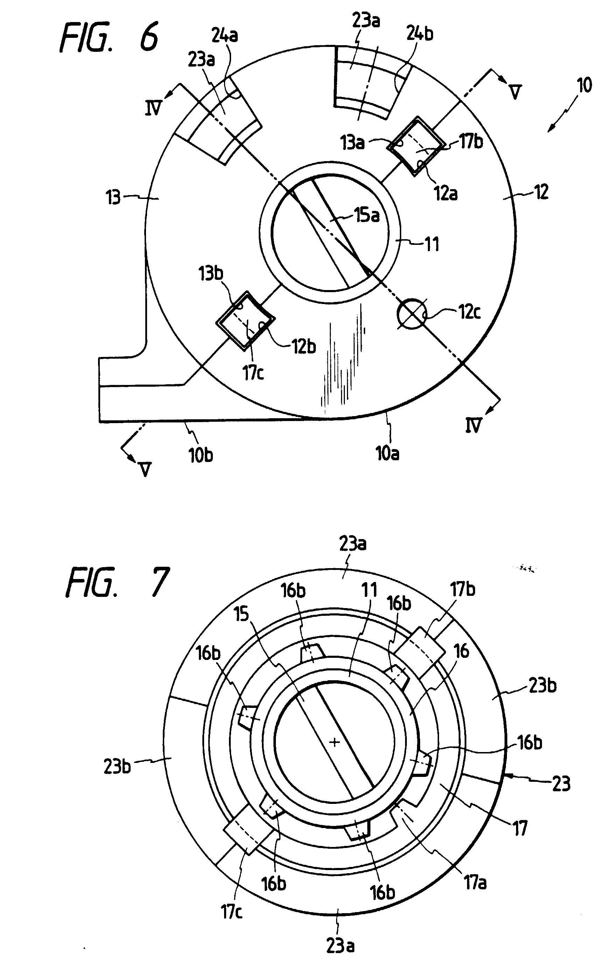

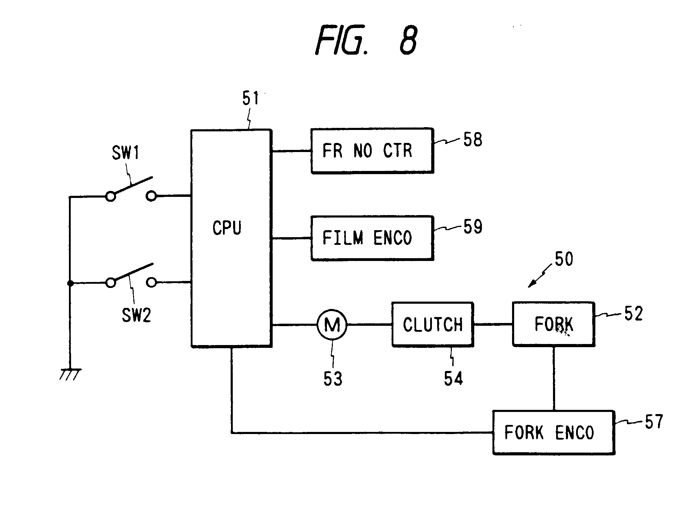

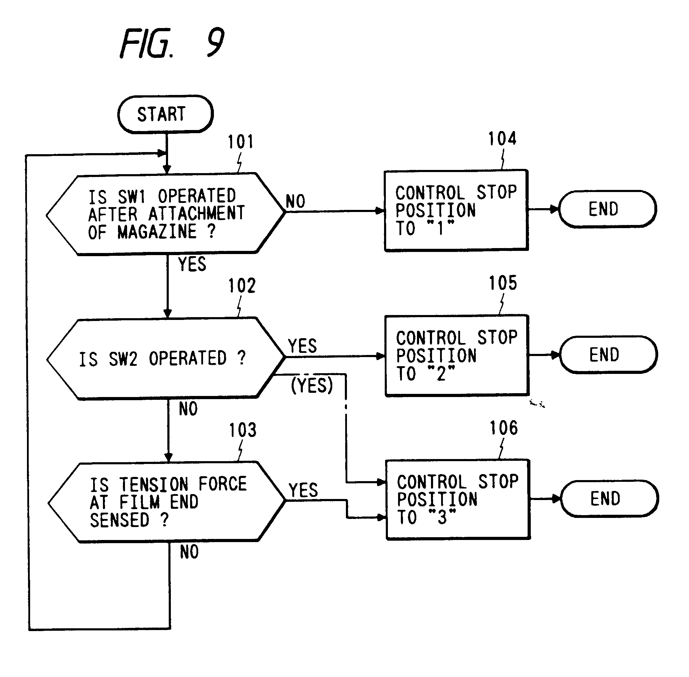

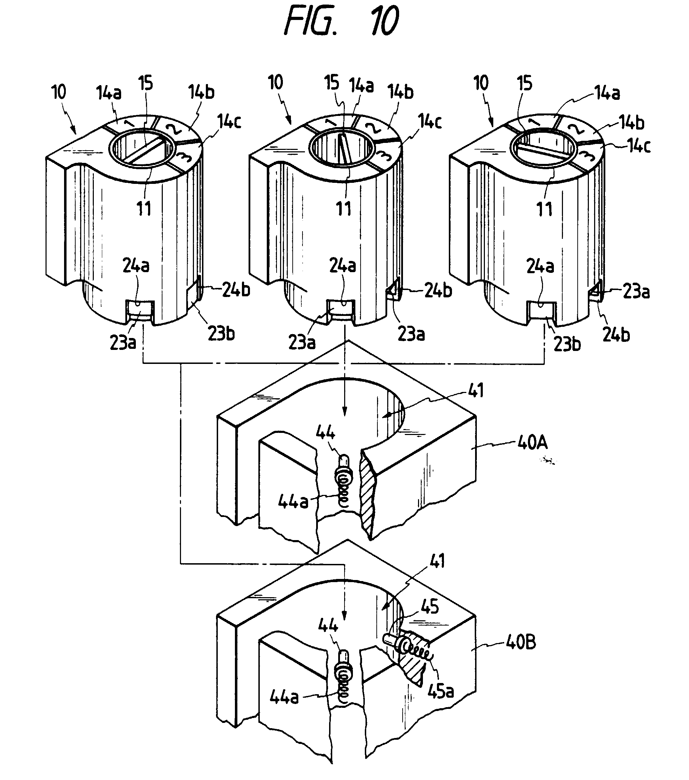

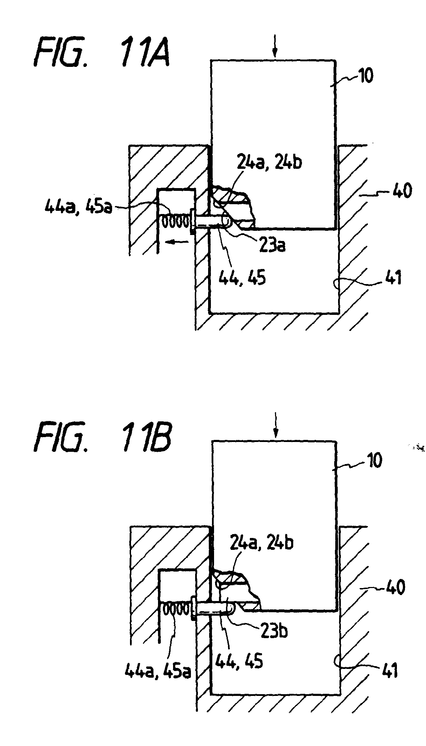

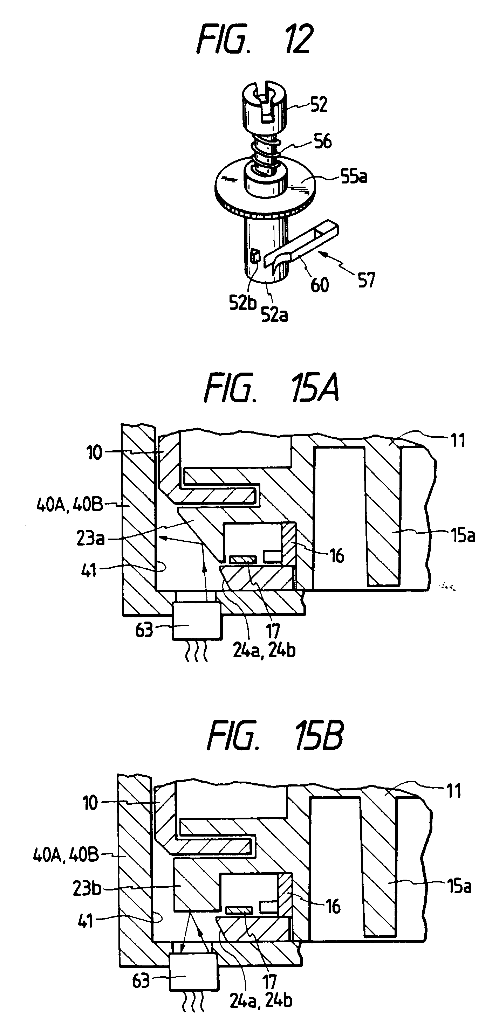

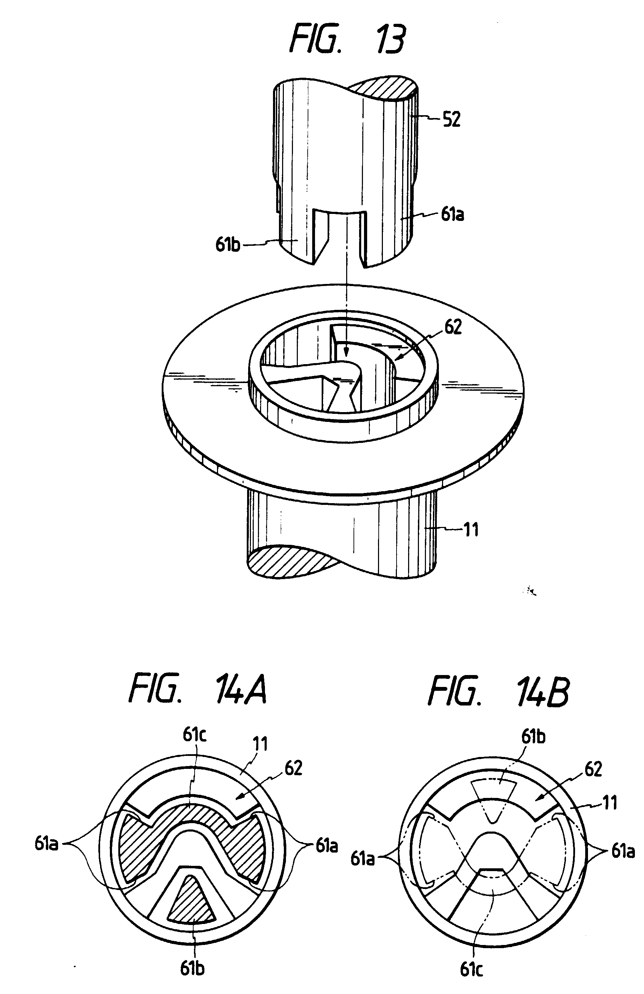

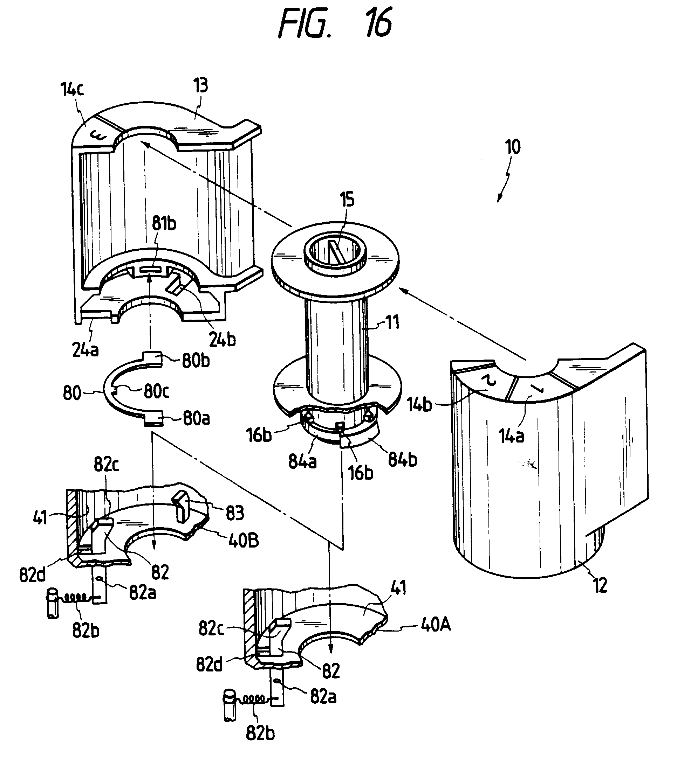

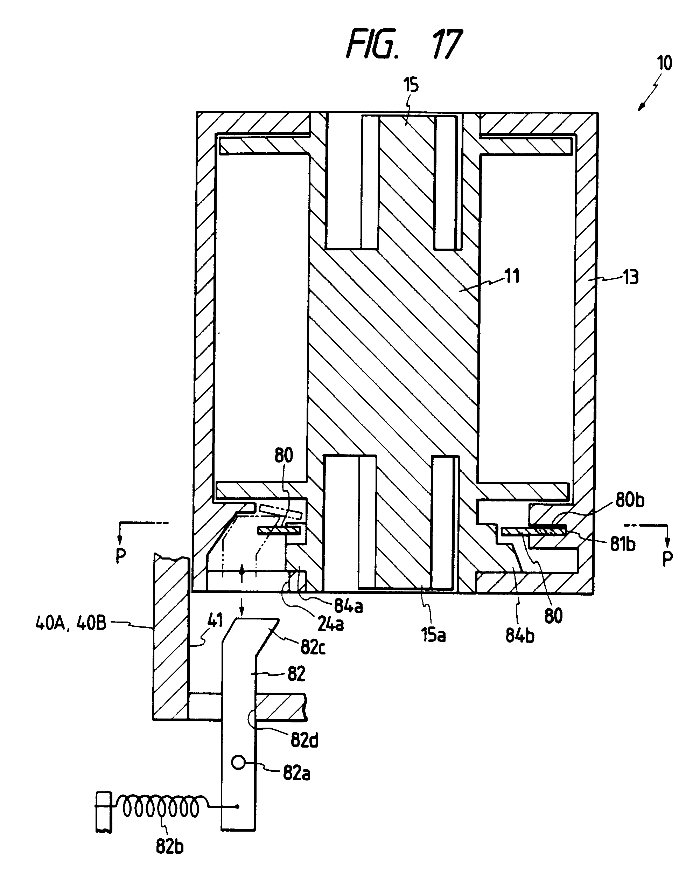

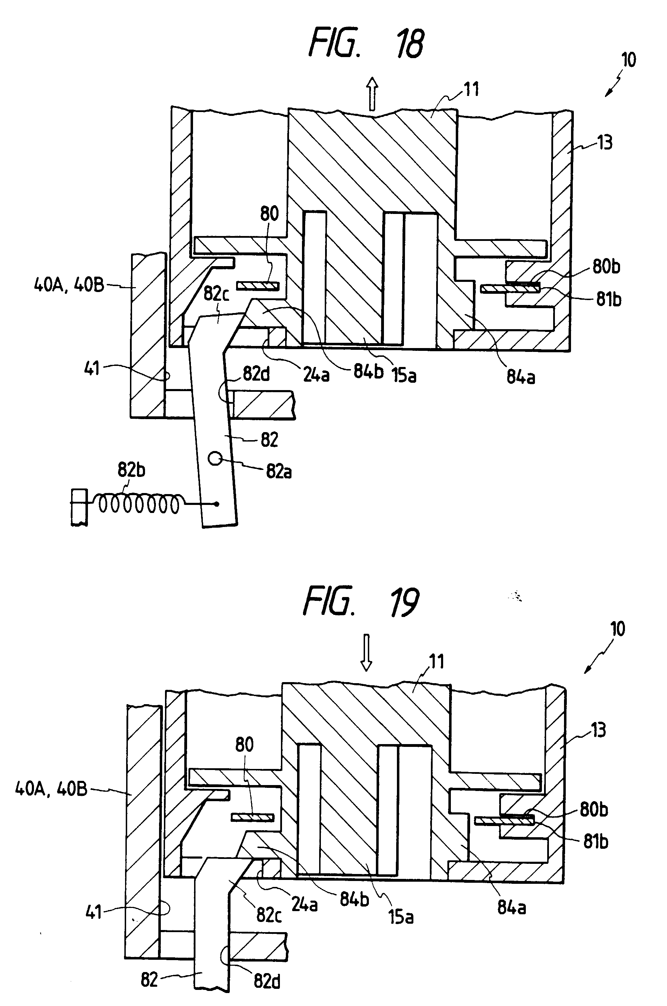

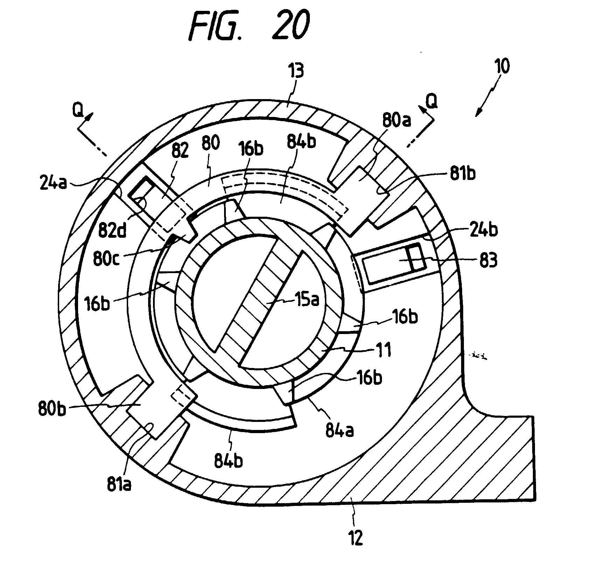

Figs. 1A, 1B and 1C are schematic plan views for explaining a film use status display function in an embodiment of a film magazine relating to the invention. Fig. 2 is a schematic perspective view showing the relationship between the film magazine and a film rewinding mechanism of a camera. Fig. 3 is a schematic exploded perspective view showing the film magazine and part of a magazine chamber in a camera. Figs. 4 and 5 show a longitudinal section of the magazine and a cross section of the major components viewed from another direction (cross-sectional views with respect to the IV-IV line and V-V line of Fig. 6). Figs. 6 and 7 show cross sections with respect to the VI-VI and VII-VII lines of Fig. 4. Fig. 8 is a block diagram showing a spool drive unit of a camera and a controller. Fig. 9 is a flowchart showing the procedure of determining a film use status. Fig. 10 is a schematic exploded perspective view showing the magazine in various states and attachment inhibition means for two types of cameras. Figs. 11A and 11B are schematic diagrams for explaining the operations of the attachment inhibition means. Fig. 12 is a schematic perspective view showing a simplified and deformed embodiment of a fork encoder. Figs. 13, 14A and 14B are a schematic perspective view showing a deformed embodiment of the fitting structure for fitting a fork to a spool, and diagrams for explaining the fitted state. Figs. 15A and 15B show deformed embodiments for detecting a spool position and thereby stopping the spool. Fig. 16 is a schematic exploded perspective view showing another embodiment of the invention. Fig. 17 shows a schematic longitudinal section with respect to the Q-Q line of Fig. 20. Figs. 18 and 19 show schematic longitudinal sections for explaining the operating state. Fig. 20 shows a cross sectional with respect to the P-P line of Fig. 17.

### DESCRIPTION OF THE PREFERRED EMBODIMENTS

Figs. 1A, 1B, 1C, 11A and 11B show an embodiment of a film magazine relating to the invention and a camera to which the film magazine is attached. A film magazine 10 employed in this embodiment is disclosed, for example, in the specification of the U.S. Patent No. 4832275, wherein the film end is caught in the magazine 10 from the beginning. When a spool 11 rotates, film end is fed and rewound. The magazine 10 consists of a cylindrical main body 10a and a lip-type film feeder 10b protruding as part of the main body 10a. As shown in Fig. 3, the magazine 10 consists of a pair of cases 12 and 13 or two-divided portions. Internally, a storage space for film wound around the spool 11 (not illustrated) is formed and a film feed mechanism (not illustrated) is built in. The details are omitted.

According to the invention, in the aforesaid film magazine, as apparent from Figs. 1 and 3, about half the circumference of the top end surface is divided into three portions. The portions acts as multiple display portions for displaying use statuses of a film in the magazine 10 (three portions in this embodiment) and is printed with display symbols of 14a, 14b and 14c or 1, 2 and 3. The portions are selectively indicated according to the movement of the spool 11 around which a film is wound. A key 15 on the top end of the spool axis is used as a pointing means which indicates a film use status by pointing to any of the display symbols 14a, 14b and 14c depending on the rotation stop position of the spool 11. The key 15, and the display symbols 14a, 14b and 14c are used in combination to indicate a use status of a film, that is; "unused (unexposed)," "extracted in the middle (partially used)," and "used up (exposed)."

The aforesaid display symbols 14a, 14b and 14c represent a new unused (unexposed) film, a film which is exposed more by more than one frame but not up to the last frame, and then extracted from a camera, and a used (exposed) film which is exposed up to the last frame. In Figs. 1A, 1B and 1C, the symbols are pointed to respectively. In addition to numbers 1, 2 and 3, characters of "unused," "middle," and "used up,," or other symbols can be used as the display symbols.

Among the display symbols, in status 2 or an "extracted in the middle" status, the magazine 10 may be re-attached to the camera and photography may be continued to expose the unexposed portion of the film. For this purpose, means for recording and storing information on the number of frames already exposed, and transferring it to the camera to which the magazine is re-attached are included in a camera 40A and the magazine 10. Specifically, a means for recording and reading information is included in the camera 40A, and various information recording media including EEPROM, RAM, or a magnetic storage are included in the magazine 10. A method used in an embodiment of JP-A-3 179 434 (published on 05.08.91) is conceivable.

However, the aforesaid configuration is not always necessary. If a camera 40B is of the simplified type, information recording mentioned above is not performed. When film is extracted in the middle, the film is not re-attached like the one used (exposed) because this may cause a double exposure. Then, the film is developed. When this type of a camera is concerned, a display simbol 2 for an "extracted in the middle" status becomes unnecessary. Only two symbols will be enough.

The invention applies to two types of cameras 40A and 40B which are characterized by whether information recording can be done or not. According to the type, status display is performed. The camera 40A which can do information recording permits attachment to a magazine chamber 41 of the camera 40A in status 1 or 2, but inhibits the attachment in status 3. The camera 40B which cannot perform information recording, permits the attachment to the magazine chamber 41 only in status 1.

On the other hand, for the present invention, it is recommended to selectively install a means which retrains the shift of a position pointed to by a key 15 or a pointing means for showing a rotating position of a spool 11 at a time except the time of attachment to a camera 40A or 40B. In the drawings, 16 represents a ring engaged with the bottom of the spool 11 in the lower chamber of a magazine 10. 16a is a protrusion which is fitted into a groove 11a formed in the lower part of the spool 11 and rotates the ring 16 and spool 11 as a unit. 17 is a stoppage ring made of spring material whose inner circumference is provided with a claw 17a which is selectively fitted to a stoppage protrusion 16b and arranged on the outer circumference of the ring 16. Hooks 17b and 17c are protruding from the outer circumference of the stoppage ring 17, and fitted into hook ditches 12a, 12b, 13a and 13b formed in the contact part in the lower part of the cases 12 and 13 constituting the magazine 10 as shown in Fig. 5. As apparent from Fig. 4, when the magazine is unattached to a camera, the claw 17a is positioned so that it may touch the stoppage protrusion 16b of the ring 16, thus restricting the rotation of the spool 11. In this state, as seen in Fig. 7, the stoppage ring 16 can rotate merely within an interval of stoppage protrusions 16b on the ring 16. When a rewinding completes, the movement of the spool 11 can be restricted within the interval. Whereby, the stop position of the spool 11 will not extend beyond an area of display symbol 14a, 14b or 14c pointed by a key 15 on the spool 11. Due to the rotation restriction, when the magazine is unattached, a position pointed at by the key 15 does not deviate from 1 to other position indicating 2 or 3.

In the aforesaid configuration, when a magazine 10 is attached to a magazine chamber 41, a restriction release pin 42 protruding from the bottom of the magazine chamber 41, fits into a hole 12c of the magazine 10, and pushes up the stoppage ring 17 against the spring elasticity as shown with an imaginary line in Fig. 4, and holds the claw 17a at a position where the claw 17a will not touch a stoppage protrusion 16b. This enables the spool 11 to rotate freely. In this case, the stoppage ring 17 is securely stopped and held by cases 12 and 13, and will not cause a friction or load unfavorable for rotation of the spool 11.

A camera 40A or 40B embodying the invention to which the aforesaid film magazine 10 is attached, as shown in Figs. 2 and 8, comprises a spool drive unit 50 for rotating a spool 11 of a magazine 10 and a controller 51 for controlling the rotation stop position of the spool 11 depending on a film use status. The configuration is detailed below. 52 in Fig. 2 is a fork. The fork 52 fits into a key 15a which is installed in the lower part of the spool 11 in correspondence with an upper key 15 or a pointing means and rotated unitedly with the upper key 15. The fork 52 receives the rotation of a film rewinding motor 53 via a reduction gear mechanism 55 having a clutch 54. Then, the fork 52 rotates the spool 11 in rewinding direction. 56 is a known fork withdrawal mechanism which absorbs a phase shift between the key 15a and fork 52 at a time of attachment of a magazine. The absorption continues until rotation starts, then the key 15a and fork 52 fit each other correctly. The interlock between the fork 52 and key 15a is released during rewinding.

The rotating position of the fork 52 is detected by a fork encoder 57 consisting of a brush 57a which rotates unitedly with a last gear (fork gear) 55a of the reduction gear mechanism 55, and a common pattern 57b and a segment pattern 57c formed on a board. In Fig. 8, SW1 is a release switch, and SW2, a middle rewind switch which is actuated to rewind film before the last frame is exposed. When the last frame is exposed, a tension at the end of film is, as already disclosed, detected during the next winding, and thereby rewinding is started automatically. 58 is a frame number counter which counts the number of frames exposed. 59 is a film encoder which detects the amount of film moved, which is used to feed film frame by frame. The information obtained by the above units is sent to an arithmetic and control circuit CPU. Based on the arithmetic result, the stop position of the fork 52 which is rotated by a motor 53 is controlled.

Then, in the aforesaid configuration, when winding completes, a controller 51 of a camera 40A determines the use status of film and controls a spool 11 to the corresponding position. Fig. 9 shows the procedure of determination. At a step 101, it is checked if a release switch SW1 is actuated after attachment of the magazine. If the switch SW1 is not actuated, control is passed to a step 104. Then, the stop position is set to 1. If the switch SW1 is actuated, control is passed to a step 102. Then, it is checked if a middle rewind switch SW2 is actuated. If it is determined in affirmative, control is passed to a step 105. The stop position of a key 15 or a pointing means is set to 2. If SW2 is not actuated, it is checked at a step 103 if the tension at the film end is detected. If it is determined in affirmative, the stop position is set to 3 at a step 106. If the tension is not detected, control is returned to the step 101. For a camera 40B which does not have an information recording means as mentioned previously, if it is determined at the step 102 that SW2 is actuated, control is passed to the step 106. Instead of the operation of the step 103, a Dx or other means may be used to read the number of film frames than can be exposed. Then, it may be checked if the number coincides with the value of a frame number counter 58.

The key 15 of the spool 11 can be controlled to stop within the generous angle of a display portion the spool 11 can stop as shown in Fig. 7. Each generous stop angle range on the spool is consistent with the corresponding angle on a pattern 57c of a fork encoder 57 shown in Fig. 2. When the spool 11 is stopped, a brush 57a checks if the spool 11 is placed on a given pattern 57c. If the spool 11 goes beyond the specific range, the spool 11 may be rerotated.

Due to the aforesaid configuration, although the configuration is very simple, a use status of film in a magazine 10, that is "unused," "extracted in the middle," or "used up (exposed)," or display symbol 1, 2 or 3, can be distinguished easily and accurately merely by monitoring the top end of the magazine 10 as shown in Figs. 1A, 1B and 1C. This permits an adequate film management, and eliminates a problem that a used magazine 10 is mistakenly attached to a camera 40 and exposed double.

According to the invention, a fitting means (consisting of a slope 23a, a non-slope 23b, and windows 24a and 24b) which assumes either of two states of fitted or unfitted depending on a film use status to permit or inhibit attachment of a magazine 40 to a magazine chamber 41 of a camera 40 is formed as part of the housing of a film magazine 10 (in this embodiment, in the side part of the bottom). The camera 40 to which the magazine 10 is attached comprises a means which changes the fitting means of the magazine 10 to the fitted or unfitted state depending on the film use status (in this embodiment, depending on the rotation of a spool 11), and a means (attachment inhibition pins 44 and 45) for permitting attachment of the magazine 10 to the magazine chamber 41 when the fitting means is in unfitted state or inhibits the attachment when the fitting means is in fitted state.

The aforesaid configuration is described below in conjunction with Figs. 6, 7, 10, 11A and llB. On the bottom of a spool 11, a fitting area 23 consisting of slops 23a and non-slopes 23b is formed having the angulation relationship as shown in Fig. 7. The slopes 23a or non-slopes 23b appear selectively from the first or second window 24a or 24b which are spaced by a given distance on the bottom side part of a case 13 constituting a magazine 10. The magazine 10 is inserted in an arrow direction in Fig. 10 and accommodated in a magazine chamber 41 of a camera 40A or 40B. In the magazine chamber 41 of the camera 40A, the first attachment inhibition pin 44 which is pressed by a spring 44a is protruding in a direction orthogonal to the magazine inserting direction from a part through which the first window 24a passes. Therein, the first attachment inhibition pin 44 can withdraw freely. In the camera 40B, the first and second attachment inhibition pins 44 and 45 which are pressed with springs 44a and 45a are protruding from parts through which the first and second windows 24a and 24b of the magazine 10 pass.

In the aforesaid configuration, as shown in Figs. 11A and 11B, when the non-slopes 23b of the fitting area 23 are exposed from the window 24a and 24b, attachment is inhibited. When the slops 23a appear, attachment is permitted. In this embodiment, in status 1, 2 or 3, the slops 23a or non-slopes 23b are exposed from the windows 24a and 24b as listed below.

| Status | Window 24a | Window 24b |
|---|---|---|
| 1 | Slope 23a | Slope 23a |
| 2 | Slope 23b | Non-slope 23b |
| 3 | Non-slope 23b | Slope 23a |

Due to the aforesaid configuration, although the configuration is very simple, when a magazine is attached to a camera, depending on the film use status of "unused," "extracted in the middle," or "used up," a fitting means of the magazine can be changed selectively to a fitted or unfitted state. Thus, re-attachment of a used film magazine 10 can be inhibited definitely and a double exposure can be prevented without fail.

In the embodiment described above, a fork 52 and a key 15a of a spool 11 are fitted or aligned each other by a bar-shape fitting as conventionally. Therefore, the key 15a fits to the fork 52 at every 180° rotation. It cannot be specified at which angle the key 15a is fitted. In position of the fork 52 is provided in a camera. Therefore, to stop a magazine 10 selectively at three positions in rotating direction, a 180° range instead of a 360° range is divided into three portions and set as display portions.

In Figure 12, the fork encoder 57 in the aforesaid embodiment is simplified. For a camera 40B, a magazine 10 which has once been attached to the camera is unconditionally controlled to status 3. In this case, when rewinding completes, a spool 11 is always controlled to status 3. Therefore, the encoder 57 is provided with a protrusion 52b protruding from part of a fork axis 52a and a switch fragment 60 which is turned ON/OFF by the protrusion 52b. Whereby, when the spool 11 is set at positions 3, the switch fragment 60 is turned ON. With the ON signal, the rotating position of the spool 11 is controlled. Thus, the fork encoder 57 can be greatly simplified.

Figs. 13, 14A and 14B show a deformed embodiment of the fitting portions of a fork 52 and a spool 11. The fitting portion of the fork 52 consists of a rotation transmitting section 61a and an error fitting prevention sections 61b and 61c. The fitting portion 62 of the spool 11 has a shape to be fitted to the fitting portion of the fork 52. The fitting portions fit each other once through a 360° rotation. With this configuration, unlike the previous embodiment (Figs. 1A to 1C) in which a 180° range is divided into three areas of 1, 2 and 3, a 360° range is divided into three areas. Therefore, the three display portions measure wider respectively. Compared with the previous embodiment, the stop accuracy of the spool 11 is made rough. This yields a great advantage in practice. In this embodiment, assuming that a magazine 10 rotates the spool 11 bidirectionally, the rotation transmitting section 61a is rotatable bidirectionally. The structure of the fitting portion is, needless to say, not limited to that of this embodiment.

In Figs. 15A and 15B, a photosensor 63 is provided at a position on the bottom of a magazine chamber 41 which corresponds to a window 24a or 24b constituting the aforesaid attachment inhibition means. Using the photosensor 63, the movements of slopes 23a and non-slopes 23b are detected to stop a fork 52. A configuration substantially similar to this one is acceptable as far as the movement of a spool 11 can be detected with the photosensor 63. Whereby, the movement of the spool 11 is directly detected to control the stop position. Even for a configuration which allows the fork 52 and spool 11 to fit each other twice through a 360° rotation, a 360° range can be allocated to three areas of 1, 2 and 3. A ring 16 is provided with three stoppage protrusions 16b on its circumference. A camera is not provided with the aforesaid attachment inhibition pins 44 and 45, or other mechanical attachment inhibition means. The photosensor in Figs. 15A and 15B is used to distinguish a slope 23a or a non-slope 23b and thereby identify the rotating position of the spool 11. Thus, the status of the magazine 10 attached is determined. Whereby, photography is permitted or inhibited. This kind of an indirect attachment inhibition mechanism is also conceivable.

Figs. 16 to 20 show other embodiment of the invention. The same components as those in the previous embodiments are assigned the same numbers. The description is omitted. In this embodiment, an arc stoppage spring means 80 is used as a means to restrain a spool 11 at a given rotation stop position. The ends 80a and 80b of the spring means 80 are fitted into stoppage grooves 81a and 81b of cases 12 and 13. A claw 80c which touches a stoppage protrusion 16b (which is united into the spool 11 in this embodiment) is provided on the internal center of the spring means 80. The first attachment inhibition lever 82 is used as a means for releasing the spring means 80 when a magazine 10 is attached to a magazine chamber 41, which also serves as an inhibition means for inhibiting attachment to the magazine chamber 41 when the magazine 10 is a used one. The lever 82 is supported by a supporting axis 82a in such a way that it can swing on the bottom of the magazine chamber 41. The lever tip 82c is normally pressed centripetally by a spring 82b and fitted to a groove 82d on the bottom of the chamber 41. In Fig. 16, a camera 40B has the second attachment inhibition lever 83 unitedly with the bottom of the magazine chamber 41.

In this embodiment, the spool 11 is provided with non-protrusions 84a and protrusions 84b instead of a fitting area consisting slopes and non-slopes. Due to the configuration, in status 1, 2 or 3, the non-protrusion 84a or protrusion 84b comes to the window 24a or 24b as listed below.

| Status | Window 24a | Window 24b |
|---|---|---|
| 1 | Non-protrusion 84a | Non-protrusion 84a |
| 2 | Non-protrusion 84a | Protrusion 84b |
| 3 | Protrusion 84b | Non-protrusion 84a |

At the tip 82c of the first attachment inhibition lever 82, a slope is formed so that the lever 82 can touch the protrusion 84b and swing away when a magazine 10 is taken out.

The operations of the embodiment having the foregoing configuration are described below.

First, an attempt is made to attach a magazine 10 in status 1 to a camera 40A or 40B. Non-protrusions 84a are positioned at windows 24a and 24b, and protrusions 84b do not interfere with attachment inhibition levers 82 and 83. Therefore, it is permitted to attach the magazine 10 to the camera 40A or 40B. When the magazine 10 is attached, the attachment inhibition lever 82 pushes up a spring means 80 as indicated with a dot line in Fig. 17. This releases a spool 11 from a rotation restraint state.

After photography, the spool 11 is set to status 2 or 3 by a camera 40A, or to status 3 by a camera 40B. After that, the magazine is taken away. When the spool 11 is controlled to status 3 by either camera 40A or 40B, as shown in Fig. 18, the protrusion 84b is positioned at the window 24a. The attachment inhibition lever 82, however, swings due to the shape of the slope. This helps extract the magazine 10 smoothly. In the camera 40B, after photography, the spool 11 is never set to status 2 but always to status 3. Therefore, the protrusion 84b cannot be positioned at the window 24b when the magazine 10 is extracted. Unlike the attachment inhibition lever 82, the second attachment inhibition lever 83 needs not be configured to swing.

Next, it is attempted to attach a magazine 10 in status 2 to the camera 40A. The non-protrusion 84a is positioned at the window 24a, permitting attachment. In the camera 40B, the second attachment inhibition lever 83 interferes with the protrusion 84b positioned at the window 24b, thus inhibiting attachment.

Finally, an attempt is made to attach a magazine 10 in status 3 to the camera 40A or 40B. The attachment inhibition lever 82 interferes with the protrusion 84b positioned at the window 24a as shown in Fig. 19. This inhibits attachment to either the camera 40A or 40B.

As mentioned above, this embodiment yields the same effects as the previous embodiments.

The present invention is not limited to the configuration of the aforesaid embodiment. The framework of a magazine 10, as well as the shapes and structures of components can be modified freely. Various deformed embodiments would be devised. In the aforesaid embodiment, the invention applies to a special-type film magazine 10 in which film feed or rewinding is performed by rotating a spool, and a camera 40A or 40B. The invention is also applicable to a typical 35-mm rolled film magazine, proving effective. In the aforesaid embodiment, three display portions 14a, 14b and 14c are used to distinguish a film use status. The present invention is not limited to this configuration. Any configuration is acceptable as far as two indications indicating "unused" and "used" at least can be done.

As described previously, according to the invention, at least two display portions for displaying film use statuses are formed on the outer surface of a film magazine. A pointing means for rotating according to the movement of a spool around which film is wound is provided to point to any of the display portions depending on the rotation stop position of the spool and thereby indicate the film use status. In addition, a means is selectively provided to restrain the movement of the spool having the pointing means except at a time except when attaching to a camera. A camera to which the film magazine is attached comprises a spool drive unit for rotating the spool of the magazine, and a controller for controlling the rotation stop position of the spool driven by the spool drive unit according to the film use status. Despite a simple configuration, a use status of film in the magazine, that is "unused," "extracted in the middle," or "used up (exposed)" can be indicated accurately. The film use status can be recognized merely by monitoring the outer surface of the magazine. This permits adequate film management, and eliminates a problem that a used magazine is mistakenly attached to a camera and exposed double. Other excellent effects will be made available. In particular, according to the invention, the spool of a magazine is used as a display means, and the rewind drive system of a camera is used as a drive means. Thus, existing components are fully utilized to achieve the required effects. This fact that no special component is needed is another great advantage. When a magazine is unattached, a restraint means which is selectively provided restrains the rotation of the spool. This liquidates a fear that the spool may rotate and indicate an incorrect status. This display is performed automatically using the mechanisms of a magazine and a camera. An operator need not do any special operation.

According to the invention, a fitting means which assumes any of two states of fitted and unfitted depending on the use status of film, and permits or inhibits the attachment of a magazine to a camera is provided as part of the housing of the film magazine. The camera to which the film magazine is attached comprises a means which changes the fitting means of the magazine to the fitted or unfitted state depending on the film use status, and a means which permits attachment of a magazine to a magazine chamber when the fitting means is in unfitted state, or inhibits the attachment when the fitting means is in fitted state. Despite the simple configuration, depending on the film use status of "unused," "extracted in the middle," or "used," the fitting means of a magazine can be changed selectively to the fitted or unfitted state. Whereby, re-attachment of a used film magazine can be prevented without fail. Then, a problem of a double exposure can be prevented definitely. Thus, various excellent effects are made available.

## Claims

1. A method of indicating a use status of a film in a film magazine (10), said film magazine comprising:
a rotatable film spool (11); and
indicator means (15, 14a-14c), the indicator means comprising a movable member (15) for indicating the use status of the film,
the method comprising moving said movable member from a first indicating state to a second indicating state by rotation of the spool,
characterised in that the method further comprises setting the indicating state of the indicator means by rotating the spool to a predetermined rotational position when said film is rewound into said film magazine, the movable member being coupled to the spool for rotation therewith.

2. A method according to claim 1, wherein the movable member is fixed to the spool (11).

3. A method according to claim 1 or 2, comprising setting the indicator means in said first indicating state when the film is usable, and in said second indicating state when the film is not usable.

4. A method according to claim 1 or 2, comprising setting the indicating means in said first indicating state when the film is unexposed, and in said second indicating state when the film has been at least partially exposed.

5. A method according to claim 1 or 2, comprising setting the indicator means in said first indicating state when the film is unexposed, in said second indicating state when the film is partially exposed, and in a third indicating state when the film has been fully exposed.

6. A method according to any preceding claim, wherein said indicating states of the indicating means are set by rotational positions of the spool which have a one-to-one relationship with the corresponding use statuses.

7. A film magazine (10) comprising:
a rotatable film spool (11); and
indicator means (15,14a-14c), the indicator means comprising a moveable member (15) for indicating a use status of the film, the moveable member being moveable from a first indicating state to a second indicating state in accordance with rotation of the spool,
characterised in that the moveable member is coupled to the spool for rotation therewith, and in that the film magazine further comprises control means (16, 17; 16, 80) for selectively restricting the amount of spool rotation when said film is rewound into said film magazine, the indicating state of the indicator means being set by the rotational position of the spool when the amount of spool rotation is restricted by said control means.

8. A film magazine according to claim 7, wherein a member (17; 80) of the control means is movable to a first condition for restricting the amount of spool rotation, and a second condition in which it does not restrict spool rotation.

9. A film magazine according to claim 7 or 8, wherein the indicator means comprises means (24a, 24b) for physically or visibly exposing a region of the movable member (23, 84), the exposed region providing an indication of the use status of the film.

10. A film magazine according to claim 9, wherein the movable member (23, 84) and the exposing means (24a, 24b) are movable relative to each other by rotation of the spool to expose selectively different regions of the movable member depending on the rotational position of the spool.

11. A film magazine according to claim 9 or 10, wherein the movable member (23, 84) comprises at least one blocking surface (23b; 84b) for blocking insertion of said magazine into a magazine chamber, and at least one non-blocking surface (23a; 84a) for allowing insertion of said magazine into said magazine chamber, and wherein the exposing means exposes in a first region (24a) a non-blocking surface when the indicator means is positioned in a first or second indicating state, and exposes a blocking surface when the indicator means is positioned in a third indicating state, the exposing means further exposing in a second region (24b) a non-blocking surface when the indicator means is positioned in the first indicating state, and exposing in the second region a blocking surface when the indictor means is positioned in the second indicating state.

12. A film magazine according to any of claims 7 to 11, wherein said indicating states of the indicating means are set by rotational positions of the spool which have a one-to-one relationship with the corresponding use statuses.

13. Film feeding apparatus (40;40A;40B) for receiving a film magazine (10), the film magazine having a rotatable film spool (11) and indicating means (15,14a-14c) for indicating a use status of the film, the film feeding apparatus comprising:
drive means (50) for driving the spool of a film magazine loaded into said apparatus; and
control means (51) operable to control the drive means to rotate the spool of said film magazine,
characterised in that the control means comprises discriminating means for assessing the use status of said film, and in that, when said film is rewound into the film magazine, the control means is operable to control the drive means to rotate the spool to a rotational position dependent on the assessed use status to cause said indicating means to indicate said use status.

14. Apparatus according to claim 13, wherein the control means (51) is operable selectively to control the driving means to rotate the spool to a first position when the film is unexposed; and
wherein the control means (51) is operable selectively to control the driving means to rotate the spool to a second position when the film has been exposed at least once.

15. Apparatus according to claim 14, wherein the control means (51) is operable selectively to control the drive means to rotate the spool to a third position when the film has been fully exposed.

16. Apparatus according to claim 13, 14 or 15, further comprising photo sensor means (63) for sensing the indicating state of the indicating means, the control means being responsive to the sensor means.

17. Apparatus according to any of claims 13 to 16, further comprising:
a magazine chamber (41) for receiving said film magazine; and
means (51, 63; 44; 44, 45; 82) for selectively inhibiting the use of said film magazine in dependence on the state of the indicating means.

18. Apparatus according to claim 17, wherein the means for selectively inhibiting use of the film magazine comprises means (44; 44, 45; 82) for selectively inhibiting loading of the film magazine into the magazine chamber.

19. Apparatus according to claim 18, for use with a film magazine in which the indicator means is settable in a first state indicating that the film is unexposed, and a second state indicating that the film has been at least partially exposed, and wherein the inhibiting means comprises means for allowing the film magazine to be loaded into the magazine chamber when the indicator means is positioned in the first state, and for inhibiting loading of the film magazine into the magazine chamber when the indicator means is positioned in the second state.

20. Apparatus according to claim 18, for use with a film magazine in which the indicator means is settable in a first state indicating that the film is unexposed, a second state indicating that the film is partially exposed, and in a third state indicating the film is fully exposed, and wherein the inhibiting means comprises means for allowing the film magazine to be loaded into the magazine chamber when the indicating means is positioned in the first state, for inhibiting the film magazine from being loaded when the indicator means is in the second or third state.

21. Apparatus according to claim 18, for use with a film magazine in which the indicator means is settable in a first state indicating that the film is unexposed, a second state indicating that the film is partially exposed, and a third position indicating that the film is fully exposed, and wherein the inhibiting means comprises means for allowing the film magazine to be loaded into the magazine chamber when the indicator means is positioned in the first or second state, and for inhibiting loading of the film magazine into the magazine chamber when the indicator means is positioned in the third state.

22. Apparatus according to any of claims 17 to 21, for use with a film magazine in which the indicator means comprises an indicator member, and means for physically or visibly exposing a selected region of the surface of said indicator member to provide an indication of the use status of the film, wherein the inhibiting means comprises means (63; 44; 44, 45; 82) for detecting the use status of the film by sensing the identity of an exposed region of said indicator member.

23. A camera (40A;40B) comprising a film feeding apparatus as defined in any of claims 13 to 22.

24. An assembly comprising a film magazine as defined in any of claims 7 to 12, and a camera as defined in claim 23 or a film feeding apparatus as defined in any of claims 13 to 21.

25. An assembly comprising a film magazine as defined in claim 8, and a camera as defined in claim 23 or a film feeding apparatus as defined in any of claims 13 to 22, wherein the film feeding apparatus comprises means (42; 82) for moving the control means of the film magazine to its second condition when the film magazine is loaded in the film feeding apparatus, to permit rotation of the spool.

## Patentansprüche

1. Verfahren zum Anzeigen eines Benutzungszustandes eines Films in einem Filmmagazin (10), wobei das Filmmagazin aufweist:
- eine drehbare Filmspule (11); und
- Anzeigemittel (15, 14a-14c), mit einem bewegbaren Element (15) zum Anzeigen des Benutzungszustandes des Films,
wobei das Verfahren umfaßt
- Bewegen des bewegbaren Elementes aus einem ersten Anzeigezustand in einen zweiten Anzeigezustand durch Drehen der Spule,
dadurch gekennzeichnet, daß
das Verfahren weiter umfaßt
- Einstellen des Anzeigezustandes der Anzeigemittel durch Drehen der Spule in eine vorbestimmte Drehstellung, wenn der Film in das Filmmagazin zurückgespult ist, wobei das bewegbare Element mit der Spule zur Drehung mit dieser gekoppelt ist.

2. Verfahren nach Anspruch 1, wobei
das bewegbare Element an der Spule (11) befestigt ist.

3. Verfahren nach Anspruch 1 oder 2, umfassend
- Einstellen der Anzeigemittel in den ersten Anzeigezustand, wenn der Film benutzbar ist, und in den zweiten Anzeigezustand, wenn der Film nicht benutzbar ist.

4. Verfahren nach Anspruch 1 oder 2, umfassend
- Einstellen der Anzeigemittel in den ersten Anzeigezustand, wenn der Film unbelichtet ist, und in den zweiten Anzeigezustand, wenn der Film mindestens teilweise belichtet ist.

5. Verfahren nach Anspruch 1 oder 2, umfassend
- Einstellen der Anzeigemittel in den ersten Anzeigezustand, wenn der Film unbelichtet ist, in den zweiten Anzeigezustand, wenn der Film teilweise belichtet ist, und in einen dritten Anzeigezustand, wenn der Film vollständig belichtet worden ist.

6. Verfahren nach einem der vorangehenden Ansprüche, wobei
die Anzeigezustände der Anzeigemittel durch die Drehstellungen der Spule eingestellt werden, welche eine 1:1-Beziehung zu den entsprechenden Benutzungszuständen haben.

7. Filmmagazin (10), umfassend:
- eine drehbare Filmspule (11); und
- Anzeigemittel (15, 14a-14c), ein bewegbares Element (15) zum Anzeigen eines Benutzungszustandes eines Films aufweisen, wobei das bewegbare Element in Übereinstimmung mit der Drehung der Spule aus einem ersten Anzeigezustand in einen zweiten Anzeigezustand bewegbar ist,
dadurch gekennzeichnet, daß
- das bewegbare Element mit der Spule zur Drehung mit dieser gekoppelt ist und
- das Filmmagazin weiter Steuermittel (16, 17; 16, 80) zum selektiven Begrenzen des Betrages der Spulendrehung, wenn der Film in das Filmmagazin zurückgespult wird, aufweist, wobei der Anzeigezustand der Anzeigemittel durch die Drehposition der Spule eingestellt wird, wenn der Betrag der Spulendrehung durch die Steuermittel begrenzt ist.

8. Filmmagazin nach Anspruch 7, wobei
ein Glied (17; 80) der Steuermittel in einen ersten Zustand zum Begrenzen des Betrages der Spulendrehung und in einen zweiten Zustand bewegbar ist, in dem es die Spulendrehung nicht begrenzt.

9. Filmmagazin nach Anspruch 7 oder 8, wobei
die Anzeigemittel Mittel (24a, 24b) zum körperlichen oder sichtbaren Freilegen eines Gebietes des bewegbaren Elementes (23, 84) aufweisen, wobei das freigelegte Gebiet eine Anzeige des Benutzungszustandes des Films bildet.

10. Filmmagazin nach Anspruch 9, wobei
das bewegbare Element (23, 84) und die Freilegemittel (24a, 24b) relativ zu einander durch Drehung der Spule bewegbar sind, um selektiv unterschiedliche Gebiete des bewegbaren Elementes in Abhängigkeit von der Drehposition der Spule freizulegen.

11. Filmmagazin nach Anspruch 9 oder 10, wobei
das bewegbare Element (23, 84) mindestens eine Blockierungsfläche (23b; 84b) zum Verhindern des Einsetzens des Magazins in eine Magazinkammer und mindestens eine nicht-blockierende Fläche (23a; 84a) zum Erlauben eines Einsetzens des Magazins in die Magazinkammer aufweist und wobei die Freilegemittel ein erstes Gebiet (24a) einer nicht-blockierenden Fläche freilegen, wenn die Anzeigemittel in einem ersten oder zweiten Anzeigezustand positioniert sind, und eine Blockierungsfläche freilegt, wenn Anzeigemittel in einem dritten Anzeigezustand positioniert sind, wobei die Freilegemittel weiter in einem zweiten Gebiet (24b) eine nicht-blockierende Fläche freilegen, wenn die Anzeigemittel im ersten Anzeigezustand positioniert sind und im zweiten Gebiet eine Blockierungsfläche freilegen, wenn die Anzeigemittel im zweiten Anzeigezustand positioniert sind.

12. Filmmagazin nach einem der Ansprüche 7 bis 11, wobei
die Anzeigezustände der Anzeigemittel durch Drehstellungen der Spule eingestellt sind, die eine 1:1-Beziehung zu den entsprechenden Benutzungszuständen haben.

13. Filmzuführvorrichtung (40, 40A, 40B) zur Aufnahme eines Filmmagazins (10), das eine drehbare Filmspule (11) und Anzeigemittel (15, 14a-14c) zur Anzeige eines Benutzungszustandes des Filmes aufweist, wobei die Filmzuführvorrichtung umfaßt:
- Antriebsmittel (50) zum Antrieb der Spule eines in die Vorrichtung eingelegten Filmmagazins, und
- Steuermittel (51), die betätigbar sind, um die Antriebsmittel zur Drehung des Filmmagazins zu steuern,
dadurch gekennzeichnet, daß
- die Steuermittel Unterscheidungsmittel zur Beurteilung des Benutzungszustandes des Films aufweisen und,
- wenn der Film in das Filmmagazin zurückgespult wird, die Steuermittel betätigbar sind, um die Antriebsmittel zur Drehung der Spule in eine vom beurteilten Benutzungszustand abhängige Drehstellung zu drehen, um die Anzeigemittel zur Anzeige des Benutzungszustandes zu veranlassen.

14. Vorrichtung nach Anspruch 13, wobei
- die Steuermittel (51) selektiv betätigbar sind, um die Antriebsmittel zur Drehung der Spule in eine erste Position zu steuern, wenn der Film unbelichtet ist, und
- die Steuermittel (51) selektiv betätigbar sind, um die Antriebsmittel zur Drehung der Spule in eine zweite Position zu steuern, wenn der Film mindestens einmal belichtet worden ist.

15. Vorrichtung nach Anspruch 15, wobei
die Steuermittel (51) selektiv betätigbar sind, um die Antriebsmittel zum Drehen der Spule in eine dritte Position zu steuern, wenn der Film vollständig belichtet ist.

16. Vorrichtung nach Anspruch 13, 14 oder 15,
die weiter Photosensormittel (63) zum Abfühlen des Anzeigezustandes der Anzeigemittel aufweist, wobei die Steuermittel auf die Sensormittel ansprechen.

17. Vorrichtung nach einem der Ansprüche 13 bis 16, die weiter aufweist:
- eine Magazinkammer (41) zur Aufnahme des Filmmagazins; und
- Mittel (51, 63; 44; 44, 45; 82) zum selektiven Verhindern der Benutzung des Filmmagazins in Abhängigkeit vom Zustand der Anzeigemittel.

18. Vorrichtung nach Anspruch 17, wobei
die Mittel zum selektiven Verhindern der Benutzung des Filmmagazins Mittel (44; 44, 45; 82) zum selektiven Verhindern des Einlegens des Filmmagazins in die Magazinkammer aufweisen.

19. Vorrichtung nach Anspruch 18 zur Benutzung mit einem Filmmagazin, wobei
- die Anzeigemittel in einen ersten Zustand, in dem sie anzeigen, daß der Film unbelichtet ist, und in einen zweiten Zustand einstellbar sind, in dem sie anzeigen, daß der Film mindestens teilweise belichtet ist, und
- die Verhinderungsmittel Mittel zum Erlauben des Einlegens des Filmmagazins in die Magazinkammer, wenn die Anzeigemittel im ersten Zustand positioniert sind, und zum Verhindern des Einlegens des Filmmagazins in die Magazinkammer, wenn die Anzeigemittel im zweiten Zustand positioniert sind, aufweisen.

20. Vorrichtung nach Anspruch 18 zur Benutzung mit einem Filmmagazin, wobei
- die Anzeigemittel in einen ersten Zustand, in dem sie anzeigen, daß der Film unbelichtet sind, einen zweiten Zustand, in dem sie anzeigen, daß der Film teilweise belichtet ist, und in einen dritten Zustand einstellbar sind, in dem sie anzeigen, daß der Film vollständig belichtet ist, und
- die Verhinderungsmittel Mittel zum Erlauben des Einlegens des Filmmagazins in die Magazinkammer aufweisen, wenn die Anzeigemittel im ersten Zustand positioniert sind, und zum Verhindern des Einlegens des Filmmagazins, wenn die Anzeigemittel im zweiten oder dritten Zustand sind.

21. Vorrichtung nach Anspruch 18 zur Benutzung mit einem Filmmagazin, wobei
- die Anzeigemittel in einen ersten Zustand, in dem sie anzeigen, daß der Film unbelichtet sind, einen zweiten Zustand, in dem sie anzeigen, daß der Film teilweise belichtet ist, und in einen dritten Zustand einstellbar sind, in dem sie anzeigen, daß der Film vollständig belichtet ist, und
- die Verhinderungsmittel Mittel zum Erlauben des Einlegens des Filmmagazins in die Magazinkammer aufweisen, wenn die Anzeigemittel im ersten oder zweiten Zustand positioniert sind, und zum Verhindern des Einlegens des Filmmagazins in die Magazinkammer, wenn die Anzeigemittel im dritten Zustand positioniert sind.

22. Vorrichtung nach einem der Ansprüche 17 bis 21 zur Benutzung mit einem Filmmagazin, wobei
die Anzeigemittel ein Anzeigeelement und Mittel zum körperlichen oder sichtbaren Freilegen eines ausgewählten Gebietes der Oberfläche des Anzeigeelementes zur Realisierung einer Anzeige des Benutzungszustandes des Films aufweisen, wobei die Verhinderungsmittel Mittel (63; 44; 44, 45; 82) zur Erfassung des Benutzungszustandes des Films durch Abfühlen der Identität eines freigelegten Gebietes des Anzeigeelementes aufweisen.

23. Kamera (40A; 40B), die eine Filmzuführvorrichtung nach einem der Ansprüche 1 bis 22 aufweist.

24. Anordnung mit einem Filmmagazin nach einem der Ansprüche 7 bis 12 und einer Kamera nach Anspruch 13 oder einer Filmzuführvorrichtung nach einem der Ansprüche 13 bis 21.

25. Anordnung mit einem Filmmagazin nach Anspruch 8 und einer Kamera nach Anspruch 23 oder einer Filmzuführvorrichtung nach einem der Ansprüche 13 bis 22, wobei
die Filmzuführvorrichtung versehen ist mit Mitteln (42; 82) zum Bewegen der Steuermittel des Filmmagazins in den zweiten Zustand, wenn das Filmmagazin in die Film-zuführvorrichtung eingelegt ist, um eine Drehung der Spule zu ermöglichen.

## Revendications

1. Procédé pour indiquer un état d'utilisation d'un film dans un magasin à film (10), ledit magasin à film comprenant :
une bobine de film rotative (11) ; et
des moyens indicateurs (15, 14a-14c), les moyens indicateurs comprenant un élément mobile (15) servant à indiquer l'état d'utilisation du film,
le procédé comprenant le déplacement dudit élément mobile depuis le premier état d'indication dans un second état d'indication en faisant tourner la bobine,
caractérisé en ce que le procédé comprend en outre le réglage de l'état d'indication des moyens indicateurs par rotation de la bobine jusque dans une position de rotation prédéterminée lorsque ledit film est rembobiné dans ledit magasin à film, l'élément mobile étant couplé à la bobine pour tourner conjointement avec cette dernière.

2. Procédé selon la revendication 2, selon lequel l'élément mobile est fixé à la bobine (11).

3. Procédé selon la revendication 1 ou 2, incluant le positionnement des moyens indicateurs dans ledit premier état d'indication lorsque le film est utilisable, et dans ledit second état d'indication lorsque le film n'est pas utilisable.

4. Procédé selon la revendication 1 ou 2, comprenant le positionnement des moyens indicateurs dans ledit premier état d'indication lorsque le film n'est pas exposé, et dans ledit second état d'indication lorsque le film a été au moins partiellement exposé.

5. Procédé selon la revendication 1 ou 2, comprenant le positionnement des moyens indicateurs dans ledit premier état d'indication lorsque le film n'est pas exposé, dans ledit second état d'indication lorsque le film est partiellement exposé et dans un troisième état d'indication lorsque le film a été complètement exposé.

6. Procédé selon l'une quelconque des revendications précédentes, selon lequel lesdits états d'indication des moyens indicateurs sont réglés au moyen de positions en rotation de la bobine, qui est associée selon une relation biunivoque aux états correspondants d'utilisation.

7. Magasin à film (10) comprenant :
une bobine de film rotative (11) ; et
des moyens indicateurs (15, 14a-14c), les moyens indicateurs comprenant un élément mobile (15) servant à indiquer un état d'utilisation du film, l'élément mobile pouvant être déplacé depuis un premier état d'indication jusqu'à un second état d'indication conformément à la rotation de la bobine,
caractérisé en ce que l'élément mobile est couplé à la bobine pour tourner conjointement avec cette dernière, et en ce que le magasin à film comporte en outre des moyens de commande (16, 17 ; 16, 80) pour limiter sélectivement la quantité de rotation de la bobine lorsque ledit film est rembobiné dans ledit magasin à film, l'état d'indication des moyens indicateurs étant réglé au moyen de la position en rotation de la bobine lorsque la quantité de rotation de la bobine est limitée par lesdits moyens de commande.

8. Magasin à film selon la revendication 7, dans lequel un élément (17 ; 80) des moyens de commande peut être amené dans une première condition pour limiter la quantité de rotation de la bobine, et dans une seconde condition, dans laquelle il ne limite pas la rotation de la bobine.

9. Magasin à film selon la revendication 7 ou 8, dans lequel les moyens indicateurs comprennent les moyens (24a, 24b) pour exposer physiquement ou d'une manière visible une région de l'élément de bobine (23, 84), la région exposée fournissant une indication de l'état d'utilisation du film.

10. Magasin à film selon la revendication 9, dans lequel l'élément mobile (23, 84) et les moyens d'exposition (24a, 24b) sont déplaçables d'une manière relative par rotation de la bobine pour exposer sélectivement différentes régions de l'élément mobile en fonction de la position en rotation de la bobine.

11. Magasin à film selon la revendication 9 ou 10, dans lequel l'élément mobile (23, 84) comprend au moins une surface de blocage (23b ; 84b) pour bloquer l'insertion dudit magasin dans une chambre à magasin et au moins une surface non bloquante (23a ; 84a) pour permettre l'insertion dudit magasin dans ladite chambre à magasin, et dans lequel les moyens d'exposition exposent, dans une première région (24a), une surface non bloquante lorsque les moyens indicateurs sont positionnés dans un premier ou un second état d'indication, et exposent une surface bloquante lorsque les moyens indicateurs sont positionnés dans un troisième état d'indication, les moyens d'exposition exposant en outre, dans une seconde région (24b), une surface non bloquante lorsque les moyens indicateurs sont positionnés dans le premier état d'indication, et exposant, dans une seconde région, une surface bloquante lorsque les moyens indicateurs sont positionnés dans le second état d'indication.

12. Magasin à film selon l'une quelconque des revendications 7 à 11, dans lequel lesdits états d'indication des moyens indicateurs sont réglés au moyen de positions en rotation de la bobine, qui sont dans une relation biunivoque avec les états d'utilisation correspondants.

13. Dispositif (40, 40A, 40B) d'alimentation en film servant à recevoir un magasin à film (10), le magasin à film comportant une bobine de film rotative et des moyens indicateurs (15, 14a-14c) pour indiquer un état d'utilisation du film, le dispositif d'alimentation en film comprenant :
des moyens d'entraînement (50) pour entraîner la bobine d'un magasin à film chargé dans ledit dispositif ; et
des moyens de commande (51) pouvant agir de manière à commander les moyens d'entraînement pour faire tourner la bobine dudit magasin à film,
caractérisé en ce que les moyens de commande comprennent des moyens discriminateurs pour évaluer l'état d'utilisation dudit film, et en ce que, lorsque ledit film est rembobiné dans le magasin à film, les moyens de commande peuvent agir de manière à commander les moyens d'entraînement pour faire tourner la bobine pour l'amener dans une position en rotation qui dépend de l'état évalué d'utilisation pour amener lesdits moyens indicateurs à indiquer ledit état d'utilisation.

14. Dispositif selon la revendication 13, dans lequel les moyens de commande (51) peuvent agir sélectivement pour commander les moyens d'entraînement en les amenant dans une première position lorsque le film n'est pas exposé ; et
dans lequel les moyens de commande (51) peuvent agir sélectivement pour commander les moyens d'entraînement pour faire tourner la bobine en l'amenant dans une seconde position lorsque le film a été exposé au moins une fois.

15. Dispositif selon la revendication 14, dans lequel les moyens de commande (51) peuvent agir sélectivement pour commander les moyens d'entraînement pour faire tourner la bobine en l'amenant dans une troisième position lorsque le film a été complètement exposé.

16. Dispositif selon la revendication 13, 14 ou 15, comprenant en outre des moyens photodétecteurs (63) pour détecter l'état d'indication des moyens indicateurs, les moyens de commande étant aptes à répondre aux moyens détecteurs.

17. Dispositif selon l'une quelconque des revendications 13 à 16, comprenant en outre :
une chambre à magasin (41) pour recevoir ledit magasin à film ; et
des moyens (51, 63 ; 44 ; 44, 45 ; 82) pour empêcher sélectivement l'utilisation dudit magasin à film en fonction de l'état des moyens indicateurs.

18. Dispositif selon la revendication 17, dans lequel les moyens empêchant sélectivement l'utilisation du magasin à film comprennent des moyens (44 ; 44, 45 ; 82) pour empêcher sélectivement un changement du magasin à film dans la chambre à magasin.

19. Dispositif selon la revendication 18, destiné à être utilisé avec un magasin à film, dans lequel les moyens indicateurs peuvent être réglés dans un premier état indiquant que le film n'est pas exposé, et un second état indiquant que le film a été utilisé en étant au moins partiellement exposé, et dans lequel les moyens d'inhibition comprennent des moyens pour permettre le chargement du magasin à film dans la chambre à magasin lorsque les moyens indicateurs sont positionnés dans le premier état, et pour empêcher un chargement du magasin à film dans la chambre à magasin lorsque les moyens indicateurs sont positionnés dans le second état.

20. Dispositif selon la revendication 18, destiné à être utilisé avec un magasin à film dans lequel les moyens indicateurs peuvent être réglés dans un premier état indiquant que le film n'est pas exposé, un second état indiquant que le film est partiellement exposé, et dans un troisième état indiquant que le film est totalement exposé, et dans lequel les moyens d'inhibition comprennent des moyens pour permettre le chargement du magasin à film dans la chambre à magasin lorsque les moyens indicateurs sont positionnés dans le premier état, et pour empêcher le chargement du magasin à film lorsque les moyens indicateurs sont dans le second ou le troisième état.

21. Dispositif selon la revendication 18, destiné à être utilisé avec un magasin à film dans lequel les moyens indicateurs peuvent être positionnés dans un premier état indiquant que le film est non exposé, un second état indiquant que le film est partiellement exposé, et une troisième position indiquant que le film est totalement exposé et dans lequel les moyens d'inhibition comprennent des moyens permettant le chargement du magasin à film dans la chambre à magasin lorsque les moyens indicateurs sont positionnés dans le premier ou le second état, et pour empêcher un chargement du magasin à film dans la chambre à magasin lorsque les moyens indicateurs sont positionnés dans le troisième état.

22. Dispositif selon l'une quelconque des revendications 17 à 21, destiné à être utilisé avec un magasin à film, dans lequel les moyens indicateurs comprennent un élément indicateur, et des moyens pour exposer physiquement ou d'une manière visible une région sélectionnée de la surface dudit élément indicateur pour fournir une indication de l'état d'utilisation du film, les moyens d'inhibition comprenant des moyens (63 ; 44 ; 44, 45 ; 82) pour détecter l'état d'utilisation du film par détection de l'identité d'une région exposée dudit élément indicateur.

23. Appareil de prise de vues (40A ; 40B) comprenant un dispositif d'alimentation en film tel que défini dans l'une quelconque des revendications 13 à 22.

24. Ensemble comprenant un magasin à film selon l'une quelconque des revendications 7 à 12, et un appareil de prise de vues tel que défini dans la revendication 23 ou un dispositif d'alimentation en film tel que défini dans l'une quelconque des revendications 13 à 21.

25. Ensemble comprenant un magasin à film tel que défini dans la revendication 8, et un appareil de prise de vues tel que défini dans la revendication 23 ou un dispositif d'alimentation en film tel que défini dans l'une quelconque des revendications 13 à 22, le dispositif d'alimentation en film comprenant des moyens (42 ; 82) pour amener les moyens de commande du magasin à film dans leur seconde position lorsque le magasin à film est chargé dans le dispositif d'alimentation en film, pour permettre une rotation de la bobine.
